# EUROPEAN PATENT SPECIFICATION

(11) **EP 2 332 723 B1**
(45) Date of publication and mention of the grant of the patent: **09.11.2022**
(21) Application number: 10193414.9
(22) Date of filing: 02.12.2010
(51) Int. Cl.: B32B 27/32

(54) **Thin film for waste packing cassettes**
Dünnfilm für Abfallverpackungskassetten
Film mince pour cassettes de conditionnement de déchets

(30) Priority: 02.12.2009 EP 09177722
(43) Date of publication of application: 15.06.2011
(73) Proprietor: Flexopack S.A., 194 00 Koropi (GR)
(72) Inventor: Gkinossatis, Dimitris, 19400, Koropi Attica (GR)
(74) Representative: Isarpatent

(56) References cited:
- EP-A1- 1 854 625
- EP-A1- 2 085 216
- WO-A1-00/63085
- WO-A1-03/020515

## Description

The present invention refers to a polymeric film comprising an odor barrier material and being able to pack malodorous waste.

A lot of waste products produce smells that are annoying to the environment. Examples are decayed food, kid nappies and cat litter.

In the prior art there are many films that could be used for protection from malodors. As well known in the art, the use of materials like EVOH, PVDC, polyacrylonitrile is recommended in order to not allow malodors escape from the container (eg bag or other configuration) and create an unpleasant atmosphere.

There are also a lot of known configurations of packing a certain length of film (eg 20 meters) in a compressed form (eg in a cassette). Examples of the representative cassettes are shown in US 4,934,529 or US 3,356,192.

Further, WO 03/020515 discloses a biaxially oriented polyolefin multilayer film having a skin layer made of a blend of a polar polymer and a non-polar polymer, for example, comprising polypropylene. The polar polymer may be selected, among others, from an amorphous nylon barrier resin. The film has substantially no inorganic fillers and yet shows no visible distortion after exposure to food products such as potato chips.

WO 00/63085 A1 described transparent multilayer polypropylene container with barrier protection.

EP 1 854 625 A1 describes multilayer cook-in films and bags.

EP 2 085 216 A1 describes a film for waste packaging cassettes. EP 2 085 216 A1 does not disclose multilayer films having a weight of less than 15 g/m2 where the film comprises at least a layer comprising polypropylene.

Generally the cassette comprises a tubular core, casing wall and cassette bottom. The film is pulled through the area between the lid of the cassette and the casing wall. The flexible tubing is dispensed from the cassette. After the malodorous item (eg diaper) is thrown into the bag the core is rotated and the flexible tube is twisted so that it closes as hermetically as possible the waste/environment area.

To dispose the next diaper the user pushes the next portion of film. The previous hermetically closed diaper is pushed downwards and the new diaper is packed in a new configuration. All these different packs are stored in a bin which is periodically emptied.

Separation of one pack to the other can be done by various means. A rotary knife is preferred.

### FILM CHARACTERISTICS

In the prior art a lot of possible film configurations either monolayer or multilayer have been proposed. The basic characteristics a film should have in order to be used in the particular case are
1. Barrier to odours
2. To have the proper deadfold properties (non resilient) so that is compressed efficiently in the cassette.
3. To have sufficient mechanical properties (eg tensile strength at break, elongation).

We have surprisingly found that all these features can be achieved with a very lightweight multilayer film with grammage less than 15 grs/square meter. This is extremely beneficial for the environment as multilayer films are extremely difficult to be produced with so small weight per surface. Prior art films are characterized by a weight per surface ratio of more than 15 grs/square meter and often of more than 20 grs/square meter.

### SUMMARY OF THE INVENTION

The invention is directed to a multilayer film with a weight of less than 15g/m² used in malodorous item packaging, where the film comprises polypropylene in at least one layer and an oxygen barrier material in at least one other layer, where the layer comprising the oxygen barrier material comprises polyamide and/or EVOH.

In a preferred embodiment, the film comprises at least two film layers comprising:
1. An oxygen barrier layer.
2. A layer comprising polypropylene, wherein the polypropylene preferably is comprised in the outer and/or inner layer of the film.

The films according to the invention show superior results regarding tensile strength and elongation characteristics. Furthermore, the films according to the invention were superior in odor testing compared to commercially available films.

### Definitions:

In this application the following definitions are used:
The term "film" refers to a flat or tubular flexible structure of thermoplastic material.

The term "heat shrinkable" refers to a film that shrinks at least 10% in at least one of the longitudinal and transverse directions when heated at 90°C for 4 seconds. The shrinkability is measured in water according to ASTM 2732. For temperatures like 100°C or more, glycerine is used as a reference liquid.

The term "total heat shrinkability" refers to the sum of heat shrinkability at the MD direction and heat shrinkability at the TD direction. In all cases, ASTM 2732 is used for measurement of shrinkabilities.

The term "multilayer" refers to a film comprising 2 or more layers.

The phrase "longitudinal direction" or "machine direction" herein abbreviated "MD" refers to a direction along the length of the film.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

As used herein, the term "homopolymer" refers to a polymer resulting from polymerization of a single monomer.

As used herein, the term "copolymer" refers to a polymer resulting from polymerization of at least two different monomers.

As used herein, the term "terpolymer" refers to a polymer of three different monomers.

As used herein, the term "polymer" includes both above types.

As used herein, the term "polyolefin" refers to any polymerized olefin, which can be linear, branched, cyclic, aliphatic, substituted or unsubstituted. More specifically, included in the term polyolefin are homopolymers of olefin, copolymers of olefin, copolymers of an olefin and a non olefinic comonomer(such as ester) etc.

Specific examples include polyethylene homopolymer, polypropylene homopolymer, polybutene homopolymer, ethylene alpha olefin copolymer, propylene alpha olefin copolymer, butene alpha olefin copolymer, ionomer, ethylene ester copolymer etc.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalysed polymers and polyethylene plastomers and elastomers.

As used herein the term "homogeneous ethylene alpha olefin copolymers" refer to ethylene alpha olefin copolymers having a molecular weight distribution less than 2.7 as measured by GPC. Typical examples of these polymers are AFFINITY from DOW or Exact from Exxon.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is less than 40%.

As used herein the phrase "ethylene vinyl acetate copolymer" or EVA refer to copolymers of ethylene and vinyl acetate.

As used herein the phrase "ethylene ester copolymer" includes any polymer made from ethylene and ester monomers. It is obvious that this term includes EVAs, EMAs and other polymers.

As used herein the term "oxygen barrier polymer" refers to polymers which have the property to limit the passage of oxygen through a film or a layer comprising the polymer. Common materials are EVOH, PVDC or polyamide.

As used herein, the term EVOH refers to saponified products of ethylene vinyl ester copolymers. The ethylene content is typically in the range of 25 to 50% per mol. All the later references to EVOH ethylene content will be in % per mol.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term "polyamide" refers to homopolymers and copolymers characterized by the presence of the amide group -CONH . Polyamide 6, polyamide 66, polyamide 12, polyamide 6/66, polyamide 6/12, polyamide elastomers, MXD polyamides and other copolymers are specifically useful for the invention. The term as used in the application encompasses aliphatic and aromatic polyamides. Also crystalline, semi-crystalline and amorphous grades.

As used herein the term "polyester" refers to polymers comprising terephthalate units. Examples of polyesters are PET (polyethylene terephthalate), PBT (polybutylene terephthalate), polyester elastomer (block copolymer comprising ester or ether units), PTT and other similar polymers.

As used herein, the term "ionomer" comprises the copolymers of ethylene and methacrylic or acrylic acid being metal neutralized. An example of such material is Surlyn from Dupont.

As used herein, the term "polypropylene" refers to polymers incorporating propylene structural units. Examples of these, are homo polypropylenes, random copolymers of propylene and ethylene, block copolymers of propylene and ethylene, copolymers or blends of propylene and rubber(such as blends of polypropylene and ethylene propylene rubber), propylene ethylene alpha olefin terpolymers and others.

These polymers may be isotactic, syndiotactic or atactic. Isotactic configuration is preferred.

As used herein the term "substantially non resilient material" refers to materials or material compounds comprising at least 40% per weight inorganics like calcium carbonate, titanium dioxide, wollastonite, mica, glass fibers, dolomite and mixtures thererof, and the like. The rest percentage per weight can be polyethylene, polypropylene, styrene polymer or other thermoplastic material.

All measurement methods mentioned herein are readily available for the skilled person. For example, they can be obtained from the American National Standards Institute at: www.webstore.ansi.org

All percentages are based on weight per weight ratio, except when otherwise stated.

The indication "grs/square meter" is the same as g/m². Both are expressing a weight to surface ratio.

### DETAILED DESCRIPTION OF THE INVENTION

According to a first aspect the present invention is directed to a multilayer film with a weight to surface ratio of less than 15g/m² for use in malodorous item packaging, where the film at least comprises a layer comprising polypropylene and a layer comprising an oxygen barrier material, where the layer comprising the oxygen barrier material comprises polyamide and/or EVOH.

According to a further aspect the present invention is directed to a multilayer film with a weight to surface ratio of less than 14g/m² for use in malodorous item packaging, where the film comprises a layer comprising polypropylene and a layer comprising an oxygen barrier material, where the layer comprising the oxygen barrier material comprises polyamide and/or EVOH.

According to a further aspect the present invention is directed to a multilayer film with a weight to surface ratio of less than 13g/m² for use in malodorous item packaging, where the film comprises a layer comprising polypropylene and a layer comprising an oxygen barrier material, where the layer comprising the oxygen barrier material comprises polyamide and/or EVOH.

In a further preferred embodiment, the present invention is directed to a multilayer film with weight to surface ration of less than 13g/m² used in malodorous item packaging, where the film comprises a layer comprising polypropylene, a layer comprising an oxygen barrier material and an inner layer comprising ethylene alpha olefin copolymer, where the layer comprising the oxygen barrier material comprises polyamide and/or EVOH.

In a further preferred embodiment, the present invention is directed to a multilayer film with a weight to surface ratio of less than 13g/m² for use in malodorous item packaging, where the film comprises a layer comprising polypropylene, a layer comprising an oxygen barrier material and an inner layer comprising a substantially non resilient material as defined above, where the layer comprising the oxygen barrier material comprises polyamide and/or EVOH.

In a further preferred embodiment, the film comprises the construction:
OUTER LAYER / ABUSE LAYER / INTERMEDIATE LAYER / BARRIER LAYER / INTERMEDIATE LAYER / ABUSE LAYER / INNER LAYER

In another preferred embodiment, the film comprises the construction
OUTER LAYER / INTERMEDIATE LAYER / BARRIER LAYER / INTERMEDIATE LAYER / INNER LAYER

### Detailed description of layers:

### Barrier layer

In a preferred embodiment of the invention, the oxygen barrier material is EVOH. The EVOH used preferably has an ethylene content less than 48%, more preferably less than 44%, more preferably less than 38%, more preferably from 27 to 32% ethylene.

In another preferred embodiment, the oxygen barrier material comprises polyamide or a blend of polyamides.

The oxygen barrier material preferably has a weight of less than 3 g/m², more preferably less than 2 g/m² and even more preferably less than 1.5 g/m².

### Outer layer

In a preferred embodiment, the outer layer comprises polypropylene.

In a further preferred embodiment, the weight of the outer layer is less than 6 g/m², more preferably less than 5 g/m².

In a further preferred embodiment, the polypropylene is a copolymer or a blend of different monomers or polymeric structures. This blending may take place during polymerization or as a later stage.

In another possible embodiment, the outer layer comprises a polyolefin, such as low density polyethylene, ethylene alpha olefin copolymer, high density polyethylene or ethylene ester copolymer, such as EVA.

### Inner layer

Preferred materials for the inner layer include polyolefins, such as low density polyethylene, high density polyethylene, ethylene ester copolymer, ethylene alpha olefin copolymer and polypropylene. Ionomers and styrene copolymers are also possible. Ethylene alpha olefin copolymer is particularly preferred.

According to a further embodiment, the present invention is of the same configuration where inner layer comprises a "substantially non resilient material" (SNR).

In a preferred version of the invention, the SNR material is at least 10 percent, preferably at least 20, preferably at least 30 percent per weight of the inner layer.

### Intermediate layers

In the intermediate layers, also called adjacent layers, typical adhesive resins like maleic anhydrite modified polyolefins may be used. Typical examples are BYNEL^{®} from Dupont and OREVAC^{®} from Arkema.

In another preferred version of the invention, polyamide could be used as intermediate layer.

### General

Additives well known in the art may be used in one or more layers of the present invention. Slip additives, antiblock additives, antifog, polymer processing aids may be used if pertinent. Antimicrobial additives may also be used in one or more of the layers to inhibit the microbe formation. Preferably the antimicrobial is put on the side where the waste is in direct vicinity.

In order to increase the mechanical properties the film may be crosslinked with one of the following methods:
E-beam radiation, gamma radiation, moisture crosslinking using silane grafting compounds, peroxide crosslinking.

The film may be in tubular form or sealed at the edges or single sheet configuration. Centerfold configuration is also possible.

The preferred production method for the film is the hot blown film method, which is well known in the art. Other methods like extrusion through flat cast die are also possible.

### EXAMPLES

### EXAMPLE 1

A 5 layer film is produced in a commercial hot blown film line with the following recipe

Inner layer, 80% EAO1+ 15% SNR1+ 5% ADDITIVES

| | |
|---|---|
| Adjacent layer | 100% ADH 1 |
| Barrier layer | EVOH 1 |
| Adjacent layer | 100% ADH1 |
| Outer layer | PP1 |

The abbreviations are explained in table 1 below.

The thickness of the structure is 5/1.5/1.5/1.5/4.5 µm starting from the inner and going to the outer layer.

**TABLE 1**

| Type | Description | Density g/cm3 |
|---|---|---|
| EAO1 | Ethylene octene copolymer | 0.92 |
| SNR1 | Calcium carbonate compound | 1.6 |
| ADH1 | LLDPE mod. Adhesive tie | 0.92 |
| EVOH 1 | EVOH with 32% ethylene | 1.19 |
| EVOH 2 | EVOH with 29% ethylene | 1.2 |
| PP1 | Polypropylene copolymer | 0.9 |

The weight to surface ratio of the film is 13.4 g/m².

### EXAMPLE 2

A 5 layer film is produced in a hot blown film commercial line with the following recipe:

| | |
|---|---|
| Inner layer | 80% EAO1+ 15% SNR1+ 5% ADDITIVES |
| Adjacent layer | 100% ADH 1 |
| Barrier layer | EVOH 2 |
| Adjacent layer | 100% ADH1 |
| Outer layer | PP1 |

The thickness of the structure is 5/1.5/1.5/1.5/3 µm starting from the inner and going to the outer layer.

The weight to surface ratio of the material is 12.16 g/m².

### TESTS

1. Tensile strength and elongation test is done according to ASTM D 882.
2. Odor test is done as explained below.

### TEST 1.

Tensile strength and elongation is measured as per ASTM D882.

MD stands for machine direction, whereas TD stands for transverse direction.

| EXAMPLE | TENSILE STRENGTH(MD) | ELONGATION (MD) | TENSILE STRENGTH(TD) | ELONGATION (TD) |
|---|---|---|---|---|
| 1 | 25 | 200 | 21 | 502 |
| 2 | 26 | 190 | 21.5 | 480 |

### ODOR TESTING

10 soiled diapers are put in a film of the present invention and also in a commercially sold film. The commercially sold film is believed to be monolayer, comprising high density polyethylene.

The packs are put in PVDC comprising bags, so the odor cannot escape during the time of the evaluation.

The bags are opened 3 days after the soiling of the diapers and smell was evaluated by a 5 member panel.

The packs made from examples 1 and 2 were found substantially less smelly than the commercially sold ones. At an arbitrary rate of 1 to 5, where 1 indicates no smell and 5 indicates heavy smell, the rate of the two examples where 0.8 for example 1 and 1.2 for example 2, while for the commercially sold film was 3.5.

### COMPARATIVE EXAMPLE 1

A 5 layer film is produced in a hot blown film commercial line with the following recipe

| | |
|---|---|
| Inner layer | 80% EAO1+ 15% SNR1+ 5% ADDITIVES |
| Adjacent layer | 100% ADH 1 |
| Barrier laye | 80% PA1+20%PA2 |
| Adjacent layer | 100% ADH1 |
| Outer layer | same as inner layer |

The thickness of the structure is 5/1.5/1.5/1.5/5 µm starting from the inner and going to the outer layer.

The weight to surface ratio of the material is 14.3 g/m².

### COMPARATIVE EXAMPLE 2

A 5 layer film is produced in a hot blown film commercial line with the following recipe

| | |
|---|---|
| Inner layer | 80% EAO1+ 15% SNR1+ 5% ADDITIVES |
| Adjacent layer | 100% ADH 1 |
| Barrier layer | EVOH 1 |
| Adjacent layer | 100% ADH1 |
| Outer layer | same as inner layer |

See table 2

The thickness of the structure is 5/1.5/1.5/1.5/5 µm starting from the inner and going to the outer layer.

The weight to surface ratio of the material is 14.37 g/m².

### COMPARATIVE EXAMPLE 3

A 5 layer film is produced in a hot blown film commercial line with the following recipe

| | |
|---|---|
| Inner layer | 80% EAO1+ 15% SNR1+ 5% ADDITIVES |
| Adjacent layer | 100% ADH 1 |
| Barrier layer | EVOH 1 |
| Adjacent layer | 100% ADH1 |
| Outer layer | HDPE1 |

The thickness of the structure is 5/1.5/1.5/1.5/5 µm starting from the inner and going to the outer layer.

The weight to surface ratio of the material is 14.25 g/m².

See table 2 for info on the resins used.

The film of comparative ex.3 was rejected as it was judged to be too flimsy for the application. Moreover during the production there were many processing problems leading to obvious defects such as wrinkles.

**TABLE 2**

| Type | Description | Density g/cm³ |
|---|---|---|
| EAO1 | Ethylene octene copolymer | 0.92 |
| SNR1 | Calcium carbonate compound | 1.6 |
| AD1 | LLDPE mod. Adhesive tie | 0.92 |
| PA1 | Polyamide 6 | 1.128 |
| PA2 | MXD based polyamide | |
| HDPE1 | High density polyethylene | 0.959 |

Tensile strength and elongation test is done according to ASTM D 882.

### TEST 1.

Tensile strength and elongation is measured as per ASTM D882. MD stands for machine direction, whereas TD stands for transverse direction.

| EXAMPLE | TENSILE STRENGTH(MD) | ELONGATION (MD) | TENSILE STRENGTH(TD) | ELONGATION (TD) |
|---|---|---|---|---|
| COM.1 | 20 | 150 | 15 | 380 |
| COM.2 | 25 | 120 | 19 | 370 |
| | | | | |
| | | | | |

As it can be seen, the films according to the comparative example show inferior results regarding tensile strength and elongation. Furthermore, the films according to the invention were superior in odor testing than comparative example 1.

## Claims

1. A multilayer film having a weight less than 15g/m² for use in malodorous item packaging, where the film comprises at least a layer comprising polypropylene and a layer comprising an oxygen barrier material, where the layer comprising the oxygen barrier material comprises polyamide and/or EVOH.

2. The film of claim 1 where the weight of the film is less than 14 g/m² or where the weight of the film is less than 13 g/m².

3. The film of claim 1 or 2 where the polypropylene comprising layer is the outer layer and/or the inner layer.

4. The film of one or more of claims 1-3 where the film comprises or consists of the structure
OUTER LAYER / ABUSE LAYER / INTERMEDIATE LAYER / BARRIER LAYER / INTERMEDIATE LAYER / ABUSE LAYER / INNER LAYER

5. The film of one or more of claims 1-3 where the film comprises or consists of the structure
OUTER LAYER / INTERMEDIATE LAYER / BARRIER LAYER / INTERMEDIATE LAYER / INNER LAYER

6. The film of claim 4 where the outer layer comprises polypropylene.

7. The film of claim 4 where the inner layer comprises a polyolefin.

8. The film of claim 7 where the inner layer comprises an ethylene alpha olefin copolymer.

9. The film of claim 4 where the inner layer comprises a substantially non resilient material.

10. The film of claim 5 where the outer layer comprises polypropylene.

11. The film of claim 5 where the inner layer comprises polyolefin.

12. The film of claim 11 where the inner layer comprises ethylene alpha olefin copolymer.

13. The film of claim 5 where the inner layer comprises a substantially non resilient material.

## Patentansprüche

1. Mehrschichtige Folie mit einem Gewicht kleiner als 15 g/m² zur Verwendung beim Verpacken von übelriechenden Gegenständen, wobei die Folie mindestens eine Polypropylen umfassende Schicht und eine ein Sauerstoffbarrierematerial umfassende Schicht umfasst, wobei die das Sauerstoffbarrierematerial umfassende Schicht Polyamid und/oder EVOH umfasst.

2. Folie nach Anspruch 1, wobei das Gewicht der Folie kleiner als 14 g/m² ist oder wobei das Gewicht der Folie kleiner als 13 g/m² ist.

3. Folie nach Anspruch 1 oder 2, wobei die Polypropylen umfassende Schicht die äußere Schicht und/oder die innere Schicht ist.

4. Folie nach einem oder mehreren der Ansprüche 1-3, wobei die Folie die folgende Struktur umfasst oder aus dieser besteht:
ÄUSSERE SCHICHT/ SCHUTZSCHICHT / ZWISCHENSCHICHT / BARRIERESCHICHT / ZWISCHENSCHICHT / SCHUTZSCHICHT / INNERE SCHICHT.

5. Folie nach einem oder mehreren der Ansprüche 1-3, wobei die Folie die folgende Struktur umfasst oder aus dieser besteht:
ÄUSSERE SCHICHT / ZWISCHENSCHICHT / BARRIERESCHICHT / ZWISCHENSCHICHT / INNERE SCHICHT.

6. Folie nach Anspruch 4, wobei die äußere Schicht Polypropylen umfasst.

7. Folie nach Anspruch 4, wobei die innere Schicht ein Polyolefin umfasst.

8. Folie nach Anspruch 7, wobei die innere Schicht ein Ethylen-alpha-Olefin-Copolymer umfasst.

9. Folie nach Anspruch 4, wobei die innere Schicht ein im Wesentlichen nicht-elastisches Material umfasst.

10. Folie nach Anspruch 5, wobei die äußere Schicht Polypropylen umfasst.

11. Folie nach Anspruch 5, wobei die innere Schicht ein Polyolefin umfasst.

12. Folie nach Anspruch 11, wobei die innere Schicht ein Ethylen-alpha-Olefin-Copolymer umfasst.

13. Folie nach Anspruch 5, wobei die innere Schicht ein im Wesentlichen nicht-elastisches Material umfasst.

## Revendications

1. Film multi-couches ayant un poids de moins de 15 g/m² destiné à être utilisé dans le conditionnement d'article malodorant, dans lequel le film comprend au moins une couche comprenant du polypropylène et une couche comprenant un matériau de barrière à l'oxygène, où la couche comprenant le matériau de barrière à l'oxygène comprend du polyamide ou de l'EVOH.

2. Film selon la revendication 1, dans lequel le poids du film est de moins de 14 g/m² ou dans lequel le poids du film est de moins de 13 g/m².

3. Film selon la revendication 1 ou 2, dans lequel la couche comprenant le polypropylène est la couche externe et/ou la couche interne.

4. Film selon une ou plusieurs des revendications 1 à 3, dans lequel le film comprend ou est constitué de la structure : COUCHE EXTERNE / COUCHE RESISTANTE / COUCHE INTERMEDIAIRE / COUCHE BARRIERE / COUCHE INTERMEDIAIRE / COUCHE RESISTANTE / COUCHE INTERNE

5. Film selon une ou plusieurs des revendications 1 à 3, dans lequel le film comprend ou est constitué de la structure : COUCHE EXTERNE / COUCHE INTERMEDIAIRE / COUCHE BARRIERE / COUCHE INTERMEDIAIRE / COUCHE INTERNE

6. Film selon la revendication 4, dans lequel la couche externe comprend du polypropylène.

7. Film selon la revendication 4, dans lequel la couche interne comprend une polyoléfine.

8. Film selon la revendication 7, dans lequel la couche interne comprend un copolymère d'éthylène alpha oléfine.

9. Film selon la revendication 4, dans lequel la couche interne comprend un matériau essentiellement non résilient.

10. Film selon la revendication 5, dans lequel la couche externe comprend du polypropylène.

11. Film selon la revendication 5, dans lequel la couche interne comprend une polyoléfine.

12. Film selon la revendication 11, dans lequel la couche interne comprend un copolymère d'éthylène alpha oléfine.

13. Film selon la revendication 5, dans lequel la couche interne comprend un matériau essentiellement non résilient.
